# EUROPEAN PATENT APPLICATION

(11) **EP 4 791 078 A1**
(43) Date of publication of application: **12.08.2026**
(21) Application number: 24879905.8
(22) Date of filing: 05.08.2024
(51) Int. Cl.: H04W 28/084, H04W 28/08, H04W 76/12, H04W 80/06, H04L 41/0895, H04W 88/08

(54) **LOAD BALANCING METHOD IN WIRELESS ACCESS NETWORK, AND ELECTRONIC DEVICE FOR PERFORMING METHOD**

(30) Priority: 20.10.2023 KR 20230141405
(71) Applicant: Samsung Electronics Co., Ltd., Suwon-si, Gyeonggi-do 16677 (KR)
(72) Inventor: SEO, Jihwan, Suwon-si, Gyeonggi-do 16677 (KR); KWON, Joonhwan, Suwon-si, Gyeonggi-do 16677 (KR)
(74) Representative: Appleyard Lees IP LLP
(86) International application number: PCT/KR2024/011513
(87) International publication number: WO 2025/084565

(57) **Abstract**

The present disclosure relates to a technique for performing load balancing in a wireless access network. The method of performing load balancing, according to an embodiment of the present disclosure, includes obtaining a packet from a client, searching for session information corresponding to the packet in a local table of at least one load balancer or a global table, updating the local table or the global table based on whether the searched session information exists, and transmitting the packet to a backend server identified according to a predetermined distribution method based on the searched session information.

## Description

### Technical Field

Embodiments disclosed in the present disclosure relate to a load balancing method and an electronic device for performing the load balancing method in a wireless access network.

### Background Art

In a 5th generation (5G) radio access network (RAN) system, control signal and data signal processing may be performed in a centralized unit (CU) or distributed unit (DU) for data transmission and reception processing of a user.

The CU may separate and perform a control function that was previously handled by a base station in the existing 4G, and may generally perform the control function at Layer 3 or higher. The DU may perform a processing function of L1 to L3 and perform a function of converting analog signals received from a radio unit (RU) into digital signals and resource management.

In a virtualized RAN (vRAN) system, when a DU or CU is virtualized into a virtualized DU (vDU) and a virtualized CU (vCU) and a virtualized radio access network system is used, the RAN may be virtualized by converting from vendor and hardware-centric in the existing RAN to software-centric and separating each architecture.

### Disclosure of Invention

### Solution to Problem

According to an embodiment of the present disclosure, a method of performing load balancing in a control plane of a virtual wireless access network includes obtaining a packet from a client, searching for session information corresponding to the packet in a local table of at least one load balancer or a global table, updating the local table or the global table based on whether the searched session information exists, and transmitting the packet to a backend server identified according to a predetermined distribution method based on the searched session information.

According to an embodiment of the present disclosure, an electronic device for performing load balancing in a control plane of a virtual wireless access network includes a transceiver, and at least one processor configured to execute one or more instructions stored in the electronic device. The at least one processor is configured to obtain a packet from a client through the transceiver when the one or more instructions are executed. The at least one processor is configured to search for session information corresponding to the packet in a local table of at least one load balancer or a global table when the one or more instructions are executed. The at least one processor is configured to update the local table or the global table based on whether the searched session information exists when the one or more instructions are executed. The at least one processor is configured to transmit the packet to a backend server identified according to a predetermined distribution method based on the searched session information when the one or more instructions are executed.

According to an embodiment, a computer-readable recording medium may include one or more program codes. The one or more program codes perform, when executed by an electronic device, obtaining a packet from a client, searching for session information corresponding to the packet in a local table of at least one load balancer or a global table, updating the local table or the global table based on whether the searched session information exists, and transmitting the packet to a backend server identified according to a predetermined distribution method based on the searched session information.

### Brief Description of Drawings

FIG. 1 illustrates a case in which a backend server of a centralized unit-control plain (CU-CP) directly communicates with an external node, according to an embodiment of the present disclosure.
FIG. 2 illustrates a connection between an external node and a backend server by using a communication module by a CU-CP according to an embodiment of the present disclosure.
FIG. 3 is a block diagram of a CU-CP using a session aggregator in a 2-layer structure according to an embodiment of the present disclosure.
FIG. 4 illustrates a block diagram of a CU-CP using a session aggregator in a 1-layer structure according to an embodiment of the present disclosure.
FIG. 5 illustrates an ECMP-based packet distribution method according to an embodiment of the present disclosure.
FIG. 6 illustrates a packet distributed to a backend server of a load balancer according to an embodiment of the present disclosure.
FIG. 7 illustrates a destination network address translation (DNAT) processing method of a router according to an embodiment of the present disclosure.
FIG. 8 illustrates a source network address translation (SNAT) processing method of a router according to an embodiment of the present disclosure.
FIG. 9 illustrates a method of updating a global table in a session aggregator according to an embodiment of the present disclosure.
FIG. 10 illustrates a method of updating a global table in a session aggregator and a local table in a load balancer according to an embodiment of the present disclosure.
FIG. 11 illustrates a method of updating a global table in a session aggregator according to an embodiment of the present disclosure.
FIG. 12 shows session distribution by a stream control transmission protocol (SCTP) load balancer.
FIG. 13 shows session distribution by an SCTP load balancer when a client is added.
FIG. 14 illustrates session distribution by an SCTP load balancer using a session aggregator according to the present disclosure.
FIG. 15 illustrates session distribution by an SCTP load balancer using a session aggregator when a client is added, according to the present disclosure.
FIG. 16 illustrates an operation of a load balancer when a session corresponding to an obtained SCTP packet does not exist in the global table or the local table, according to an embodiment of the present disclosure.
FIG. 17 illustrates an operation of a load balancer when a session corresponding to an SCTP packet exists in a local table, according to an embodiment of the present disclosure.
FIG. 18 illustrates an operation of a load balancer when a session corresponding to an SCTP packet exists in a global table, according to an embodiment of the present disclosure.
FIG. 19 is a flowchart illustrating a method by which an electronic device performs load balancing in a wireless access network according to an embodiment of the present disclosure.
FIG. 20 illustrates an electronic device for performing load balancing in a wireless access network according to an embodiment of the present disclosure.

### Mode for the Invention

In the present disclosure, the expression "at least one of a, b or c" may refer to "a", "b", "c", "a and b", "a and c", "b and c", "all of a, b and c", or variations thereof.

The terms used in the present disclosure are selected from the most widely used general terms possible while considering the functions of the present disclosure, but may vary depending on the intention of engineers in the field, precedents, the emergence of new technologies, and the like. In certain cases, there are terms arbitrarily selected by the applicant, and in such cases, their meanings are described in detail in the corresponding description of an embodiment of the present disclosure. Therefore, the terms used in the present disclosure need to be defined based on the meaning of the terms and the overall content of the present disclosure, rather than simply the names of the terms.

Singular expressions include plural expressions unless context clearly indicates otherwise. All terms including technical and scientific terms used in the specification have the same meaning as commonly understood by those of skill in the art to which the present disclosure belongs. Terms that include ordinal numbers, such as first or second used in the specification may be used to describe various components, but the components are not limited by the terms. Terms are used solely to distinguish one component from another.

Throughout the specification, unless explicitly described to the contrary, the word "comprise (include)" and variations such as "comprises (includes)" or "comprising (including)", will be understood to imply the inclusion of stated elements but not the exclusion of any other elements. The terms such as "...unit" or "module" disclosed in the specification mean units for processing at least one function or operation, which may be implemented by hardware, software, or a combination thereof.

Hereinafter, embodiments of the present disclosure are described in detail such that those of skill in the art may easily implement the same with reference to the accompanying drawings. However, the present disclosure may be implemented in various different forms and is not limited to the embodiments described herein. To clearly explain an embodiment of the present disclosure in the drawings, portions that are not related to explanation are omitted, and similar portions are given similar drawing reference numerals throughout the specification. The reference numerals in the drawings are only for the purpose of explaining each drawing, and different reference numerals used in different drawings are not intended to denote different elements.

Throughout the specification, when a part is described to be "connected" to another part, this includes not only being "directly connected" or "physically connected," but also being "electrically connected" with another part intervening. In the present disclosure, the terms "transmit," "receive," and "communicate" include both direct communication and indirect communication. Unless explicitly described to the contrary, the word "comprise (include)" and variations such as "comprises (includes)" or "comprising (including)", will be understood to imply the inclusion of stated elements but not the exclusion of any other elements.

Throughout the present disclosure, unless explicitly described to the contrary, "or" is inclusive and not exclusive. Thus, unless clearly described otherwise or the context describes otherwise, "A or B" may refer to "A, B, or both." In the present disclosure, the phrases "at least one of" or "one or more of" may mean that different combinations of one or more of the listed items may be used, or that only any one of the listed items is required. For example, "at least one of A, B, and C" may include any of the following combinations: A, B, C, A and B, A and C, B and C, or A and B and C.

"Controller" may refer to any device, system or part thereof that controls at least one operation. The controller may be implemented in hardware, a combination of hardware and software, or firmware. The functions associated with a specific controller may be a centralized or distributed type, local or remote.

In the present disclosure, the term "packet" may be used interchangeably with data packet, message, and payload.

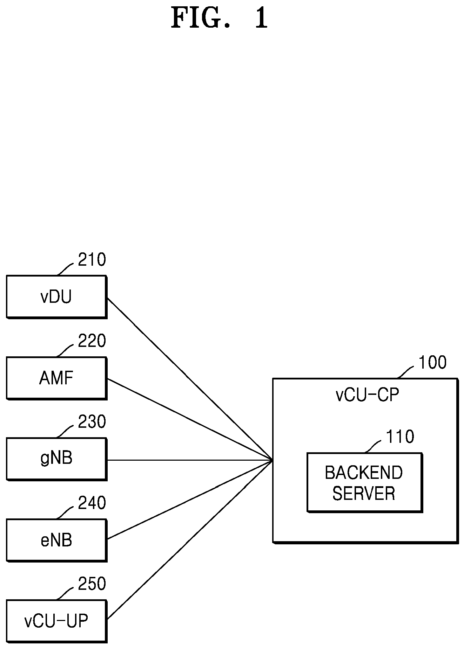

FIG. 1 illustrates a case in which a backend server of a virtualized centralized unit-control plain (vCU-CP) directly communicates with an external node, according to an embodiment of the present disclosure.

Referring to FIG. 1, in an embodiment, a vCU-CP 100 may include at least one backend server 110, and may receive a packet processing request from at least one client and process a packet by using the backend server 110. In an embodiment, the vCU-CP 100 may be a virtualized centralized network control plane that may establish and manage a communication path between a network device and a service.

Here, the packet is data for a client to perform communication and may include a stream control transmission protocol (SCTP) packet. In the present disclosure, for convenience of explanation, the SCTP packet are used as an example.

A virtualized wireless network may include components of a virtualized distributed unit (vDU) and a virtualized centralized unit (vCU). The vDU may be installed externally with a radio unit (RU), but the vCU may be centralized and manage at least one vDU. Deployment of vDUs and vCUs enables new services to be provided to users in less time and with fewer resources.

According to an embodiment, the vCU may transmit and receive data through at least one new radio (NR) interface when communicating with other modules in accordance with 5G standards.

For example, the NR interface may include an F1 interface as a standard for the vCU to communicate with the vDU, an E1 interface between a vCU-CP and a virtualized centralized unit-user plane (vCU-UP) 250 inside the vCU, an NG interface for communication between the vCU and a core network, an Xn interface for communication between the vCU and a gNB 230, and an Xn interface for communication between the vCU and an eNB 240. Here, the NR interface may transmit or receive data by utilizing a stream control transmission protocol (SCTP).

According to an embodiment, at least one backend server 110 may perform a function of a call processing module. For example, the at least one backend server 110 may receive a packet and process various services including communication connection management, communication service provision, quality management, and error and abnormal situation management.

At least one client requesting packet processing may include a virtualized distributed unit (vDU) 210, an access and mobility management function (AMF) 220, an evolved NodeB (eNB) 230, a next-generation NodeB (gNB) 240, and a virtualized centralized unit-user plain (vCU-UP) 250. Although the present disclosure describes the vDU 210 and the vCU-UP 250 assuming a v-RAN in which all components are virtualized, at least one client may include a non-virtualized distributed unit (DU) and a non-virtualized centralized unit-user plain (CU-UP). The at least one client may include a device in the 3GPP standard document that may request packet processing from the vCU-CP 100.

According to an embodiment, the vDU 210 may distribute functions of a wireless base station and perform data processing and may communicate with the vCU-CP 100 based on the F1 interface standard. For example, the vDU 210 may perform functions such as wireless resource management, user authentication, and data transmission.

According to an embodiment, the AMF 220 may be used in a mobile communication network, may manage user movement and service access between base stations, and may communicate with the vCU-CP 100 based on the E1 interface standard. For example, the AMF 220 may track a user location and control access to services.

According to an embodiment, the eNB 240 may be a base station in a wireless network of 4G long term evolution (4G LTE) or LTE-Advanced, and the gNB 230 may be a base station in a 5G NR network. The eNB 240 and the gNB 230 may transmit wireless signals and communicate with a user device. The eNB 240 and the gNB 230 may communicate with the vCU-CP 100 based on the X2 and Xn interface standards, respectively.

According to an embodiment, the vCU-UP 250 is a virtualized user plane of a network and may process and transmit user data. Accordingly, the vCU-UP 250 may be virtualized to help increase network efficiency and flexibility. The vCU-UP 250 may communicate with the vCU-CP 100 based on the E1 interface standard.

When the backend server 110 within the vCU-CP 100 communicates directly with a client, there is an advantage of reducing the use of separate resources for communication modules inside the vCU-CP 100, but dependencies between functions of the vCU-CP 100 is high, and thus there is a disadvantage that software maintenance is difficult and application to a cloud environment is difficult.

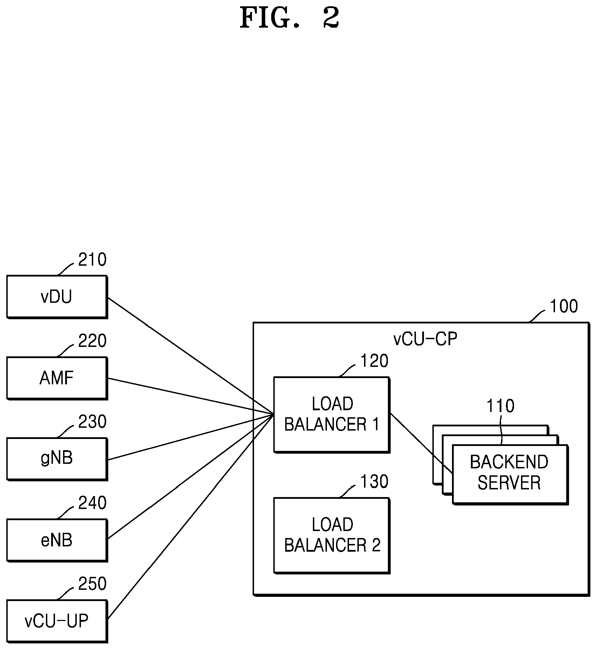

FIG. 2 illustrates a connection between an external node and a backend server by using a communication module by a vCU-CP according to an embodiment.

Referring to FIG. 2, the vCU-CP 100 according to an embodiment may include at least one backend server 110, a load balancer 1 120 in an active state, and a load balancer 2 130 in a standby state.

For dualization, the vCU-CP 100 may include the load balancer 2 130 in a standby mode in addition to the load balancer 1 120 in an active mode. Alternatively, in an embodiment, the vCU-CP 100 may include a plurality of load balancers 1 120 in an active mode.

When the vCU-CP 100 includes the load balancer 1 120 in an active mode and the load balancer 2 130 in a standby mode, only the load balancer 1 120 in an active mode processes a large amount of traffic and the load balancer 2 130 in a standby mode may not process traffic, and thus a problem of packet loss may occur.

When the vCU-CP 100 includes only the plurality of load balancers 1 120 in an active mode, a problem of increased overhead for synchronization may occur when information synchronization is required between the load balancers 1 120 in an active state.

Accordingly, the present disclosure proposes a method and device for distributing traffic and forwarding a packet to the at least one backend server 110 while all load balancers are activated. In an embodiment of the present disclosure, all load balancers, including an SCTP load balancer of L4 based on a SCTP protocol and an NR load balancer of L7 based on an NR interface message, may be activated in a virtualized wireless access network.

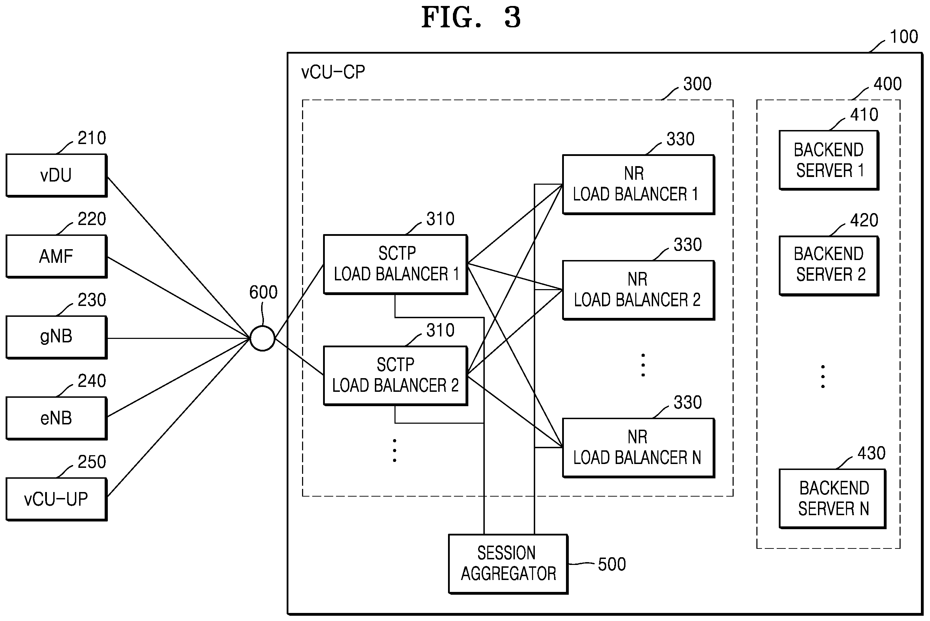

FIG. 3 is a block diagram of a vCU-CP using a session aggregator in a 2-layer structure according to an embodiment of the present disclosure.

Referring to FIG. 3, in an embodiment of the present disclosure, the vCU-CP 100 may include a load balancer 300, at least one backend server 400, and a session aggregator 500. In FIG. 3, only components for explaining the structure of the vCU-CP 100 are shown, and the components included in the vCU-CP 100 are not limited as shown in FIG. 3. Each component illustrated in FIG. 3 conceptually separates the functions of the vCU-CP 100, and the arrangement of the components is not limited to that illustrated in FIG. 3. For example, the session aggregator 500 may be located within the load balancer 300.

In the present disclosure, the term "session" refers to a logical group of connections or interactions, and may be used to track and maintain interactions between a client and the backend server 400.

The function for vDU 210, the AMF 220, the gNB 230, the eNB 240, and the vCU-UP 250 may perform communication by using the functions and the same interfaces as those described with reference to FIG. 1, and thus a detailed description is omitted.

In an embodiment of the present disclosure, the load balancer 300 may include, in two layers, at least one SCTP load balancer 310 of L4 based on an SCTP protocol and at least one NR load balancer 330 of L7 based on an NR interface. In an embodiment, the at least one SCTP load balancer 310 and the at least one NR load balancer 330 may be connected to each other to forward an SCTP packet, and may be connected to the session aggregator 500 to forward a processed SCTP packet to the backend server 400.

The SCTP load balancer 310 may distribute incoming connections among multiple SCTP servers or clients and balance traffic. For example, the SCTP load balancer 310 may perform functions of distributing a connection load input to multiple SCTP servers or monitoring the state of each server to switch traffic from a failed server to another server.

The SCTP load balancer 310 may process an SCTP packet from a client and select an appropriate backend server among the backend servers 400 for the received SCTP packet. The SCTP load balancer 310 may network address translation (NAT)-process the SCTP packet and transmit the processed SCTP packet to the selected backend server.

The NR load balancer 330 may be used in a 5G wireless network and may control and manage data flow in the network. For example, the NR load balancer 330 may perform functions of evenly distributing data connections coming into multiple NR base stations and managing quality according to a Quality of Service (QoS) policy.

The NR load balancer 330 may perform functions of decapsulating the SCTP packet received from the SCTP load balancer 310 and forwarding the SCTP packet to the backend server 400 based on an identifier (ID) of an NR application protocol (AP) message.

The SCTP load balancer 310 may forward the SCTP packet to the NR load balancer 330 by using a least connection or Round Robin distribution algorithm.

The backend server 400 may include a call processing module, and the backend server 400 may represent a backend which the NR message processed by the load balancer 300 reaches. N backend servers 410, 420, ... , and 430 may perform different call processing.

A router 600 may perform an IP routing function of determining which load balancer among the plurality of activated STCP load balancers 310 to forward traffic or IP packets transmitted from the client to and forwarding the traffic or the IP packets. The router 600 may distribute packets to the SCTP load balancers 310 having the same cost by using a distribution method using equal-cost multi-path routing (ECMP) technology. For example, the distribution method used by the router 600 may be a Round Robin or hashing method.

In an embodiment of the present disclosure, the session aggregator 500 may be connected to the SCTP load balancer 310 and the NR load balancer 330 to exchange information for distributing traffic. In an embodiment, the session aggregator 500 may include a global table that stores session information processed by the SCTP load balancer 310 and the NR load balancer 330.

For example, to share a session between the SCTP load balancer 310, the session aggregator 500 may store NAT information processed by the SCTP load balancer 310 in the global table.

In an embodiment of the present disclosure, the session aggregator 500 may distribute traffic to the backend server 400, which is the final destination for processing AP messages for each NR interface of the NR load balancer 330, according to a distribution criterion. For example, the distribution criterion by which the session aggregator 500 distributes traffic to the backend server 400 may include at least one of whether a corresponding message is a user equipment (UE) message, a UE ID, an NR interface type (F1, E1, NG, XN, or X2), a handover message, a protocol data unit (PDU) session management message, a UE context management message, a non access stratum (NAS) transport message, a data usage reporting message, a location reporting message, a paging message, a configuration transfer message, a warning message, and a UE radio capability message.

In an embodiment of the present disclosure, the electronic device may include the load balancer 300 and the session aggregator 500, and may perform the functions of the load balancer 300 and the session aggregator 500.

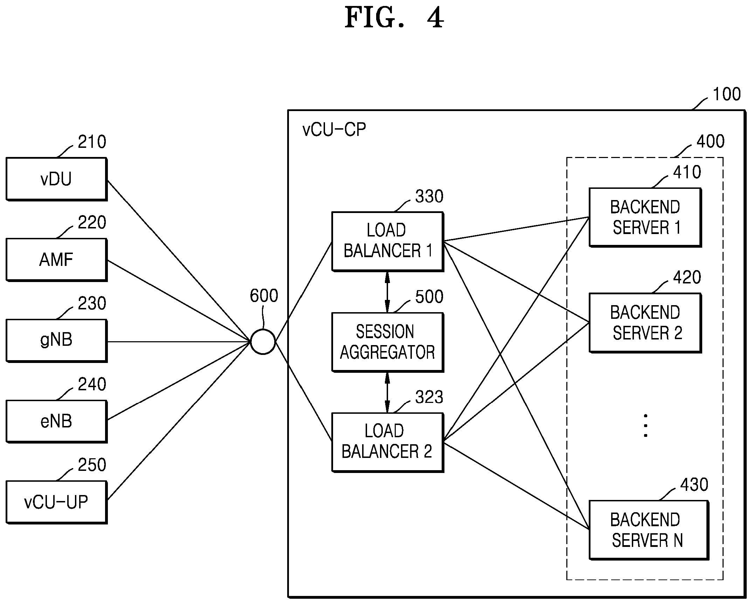

FIG. 4 illustrates a block diagram of a vCU-CP using a session aggregator in a 1-layer structure according to an embodiment of the present disclosure.

Referring to FIG. 4, the vCU-CP 100 may include a load balancer 1 351, a load balancer 2 353, the backend server 400, and the session aggregator 500. In FIG. 4, only components for explaining the structure of the vCU-CP 100 are shown, and the components included in the vCU-CP 100 are not limited as shown in FIG. 4. Each component illustrated in FIG. 4 conceptually separates the functions of the vCU-CP 100, and the arrangement of the components is not limited to that illustrated in FIG. 4. In FIG. 4, for convenience of explanation, the vCU-CP 100 is illustrated as including only the load balancer 1 351 and the load balancer 2 353, but may further include a plurality of activated load balancers for packet processing.

The vDU 210, the AMF 220, the gNB 230, the eNB 240, the vCU-UP 250, and the router 600 perform the functions described with reference to FIGS. 1 and 3, a detailed description thereof is omitted.

In an embodiment of the present disclosure, the load balancer 1 351 and the load balancer 2 353 may perform the functions of the L4 SCTP load balancer 310 and the L7 NR load balancer 330 of FIG. 3 together. In other words, the load balancer 1 351 and the load balancer 2 353 may receive and process SCTP packets and forward the SCTP packets to one of the backend servers 400.

In an embodiment of the present disclosure, when the load balancer 1 351 and the load balancer 2 353 operate as endpoints of SCTP, SCTP packets may be decapsulated by the load balancer 1 351 and the load balancer 2 353, and NR messages may be forwarded to a specific backend server 400.

In an embodiment of the present disclosure, when the backend server 400 operates as an endpoint of SCTP, the load balancer 1 351 and the load balancer 2 353 may check information of the NR message in the SCTP packet and forward the SCTP packet to one of the backend servers 400.

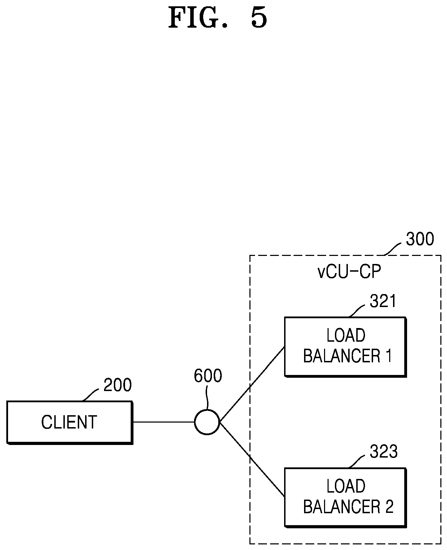

FIG. 5 illustrates an ECMP-based packet distribution method according to an embodiment of the present disclosure.

Referring to FIG. 5, when a client 200 transmits an SCTP packet to the vCU-CP 100, the client 200 may use an address of the SCTP load balancer as an IP address of a destination. For example, when a physical IP of a load balancer 1 321 is 10.0.0.10 and a physical IP of a load balancer 2 323 is 10.0.0.20, and a common virtual IP is 192.168.10.10, the load balancer 1 321 and the load balancer 2 323 may use a virtual IP address 192.168.10.10 as a representative IP. In this case, the client 200 may transmit an SCTP packet by using the virtual IP address 192.168.10.10 as the destination IP address, and the router 600 may distribute the packet by using an ECMP protocol. Here, it is assumed that the cost of a routing path from the router 600 to the load balancer 1 321 and the cost of a routing path from the router 600 to the load balancer 2 323 are the same.

The ECMP protocol is one of the routing protocols for IP packets and is a protocol that determines a next destination by using a distribution algorithm when there are multiple routing paths with the same cost to a single destination address. For example, the distribution algorithm may include a random, hashing, Round-Robin algorithm, or least connection algorithm.

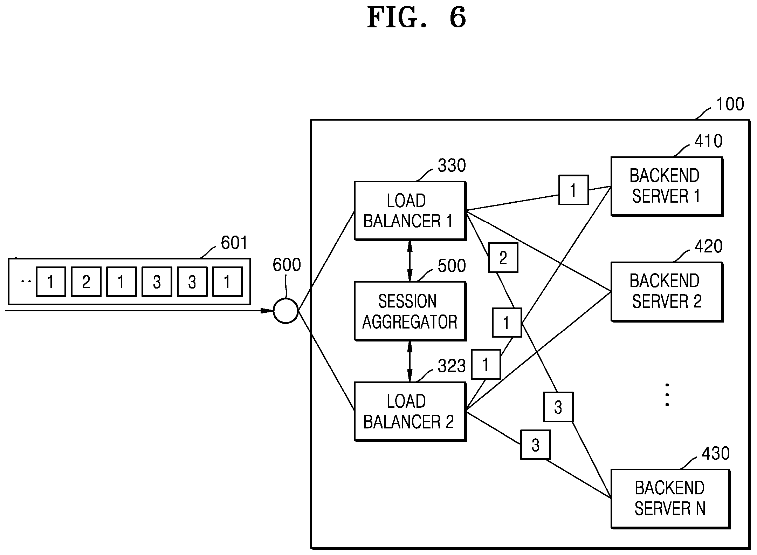

FIG. 6 illustrates a packet distributed to a backend server of a load balancer according to an embodiment of the present disclosure.

Referring to FIG. 6, according to an embodiment of the present disclosure, when an SCTP packet 601 is input to the router 600, the router 600 may distribute and forward the SCTP packet 601 to the load balancer 1 321 and the load balancer 2 323 by using the distribution algorithm described above.

Here, the SCTP packet 601 may be received from multiple clients by a sticky session, and thus a plurality of packets received from one client may be processed only by one backend server. For example, when a packet is first processed by a backend server according to a request of a client, a location at which the packet is subsequently processed according to the request of the client is the backend server in which the packet is first processed.

For example, when the SCTP packet 601 is expressed as 1 when forwarded from a first client, 2 when forwarded from a second client, and 3 when forwarded from a third client, the SCTP packet 601 may be forwarded to the router 600 in the order of 133121. The router 600 may forward SCTP packets 1, 3, 2 to the load balancer 1 321 and SCTP packets 1, 3, 1 to the load balancer 2 323 by using the distribution algorithm described above.

According to an embodiment of the present disclosure, to perform a sticky session, the session aggregator 500 may forward the SCTP packets requested from the same client to the same backend server in the load balancer 1 321 and the load balancer 2 323 by using a global table.

For example, regarding the SCTP packets 1, 3, and 2 forwarded to the load balancer 1 321, using the session aggregator 500, the SCTP packet 1 may be forwarded to a backend server 1 410, the SCTP packet 3 may be forwarded to a backend server 2 420, and the SCTP packet 2 may be forwarded to a backend server N 430. Regarding the SCTP packets 1, 3, 1 forwarded to the load balancer 2 323, using the session 500, the SCTP packet 1 may be forwarded to the backend server 1 410, the SCTP packet 3 may be forwarded to the backend server 2 420, and SCTP packet 1 may be forwarded to the backend server 1 410 again.

The load balancer 1 321 and the load balancer 2 323 may perform NAT processing for converting addresses for packets. NAT processing may include destination NAT (DNAT) processing, which converts a destination address, and source NAT (SNAT) processing, which converts a source address.

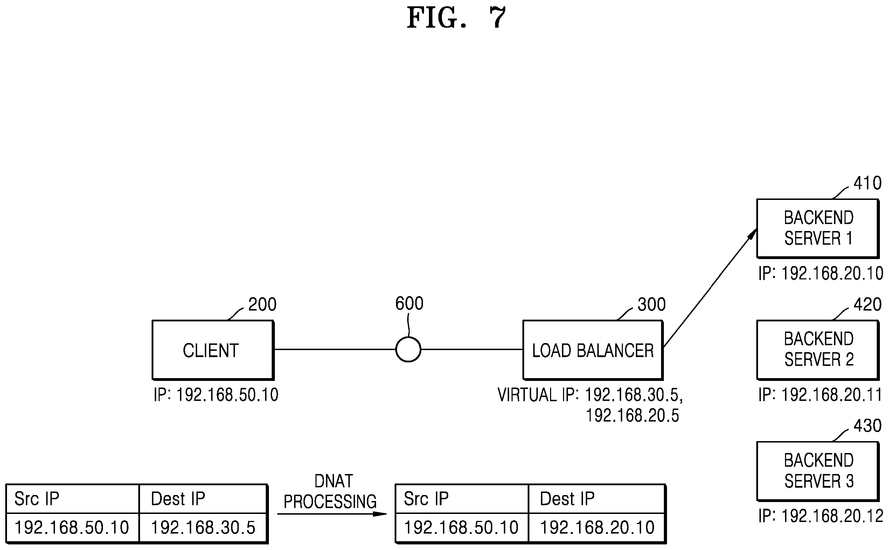

FIG. 7 illustrates a DNAT processing method of a load balancer according to an embodiment of the present disclosure.

Referring to FIG. 7, according to an embodiment of the present disclosure, a packet forwarded from the client 200 to the router 600 may be forwarded by applying the destination IP address as the virtual IP address of the load balancer 300. The load balancer 300 may perform DNAT processing for converting the forwarded virtual IP address into an address of a selected backend server.

For example, when the destination IP address of a packet obtained from the client 200 is 192.168.30.5, the load balancer 300 may convert the destination address to 192.168.20.10, which is the IP address of backend server 1 410 among the backend server 1 410, the backend server 2 420, and the backend server N 430, and forward the packet to the backend server 1 410.

Accordingly, the backend server 1 410 may determine to receive the packet from the load balancer 300 and not from the client 200, and thus load distribution of the backend server may be achieved through the load balancer 300.

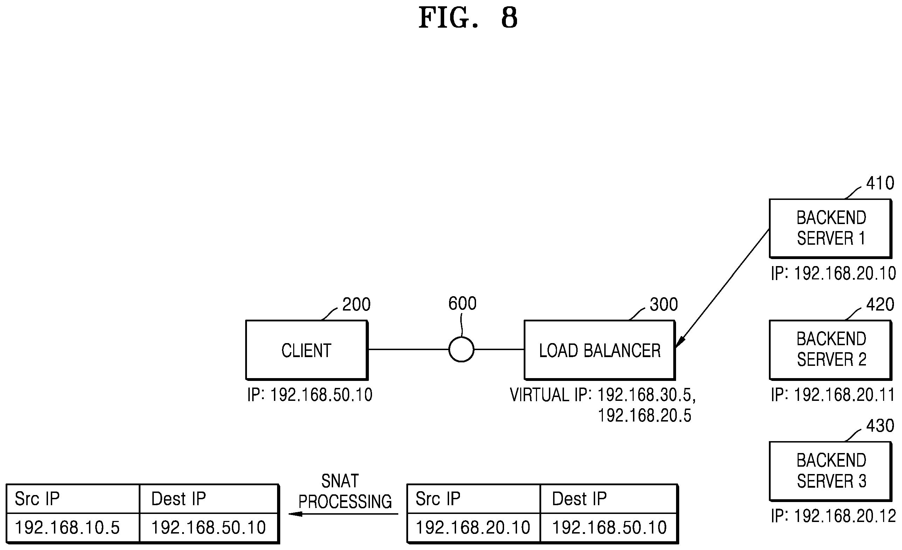

FIG. 8 illustrates a SNAT processing method of a load balancer according to an embodiment of the present disclosure.

Referring to FIG. 8, according to an embodiment of the present disclosure, a packet forwarded from the backend server 1 410 to the router 600 may be forwarded with a source IP address as the address of the backend server, and the load balancer 300 may perform SNAT processing to convert a source address into a virtual address of the load balancer 300.

For example, when the backend server 1 410 forwards a response packet to the client 200, the source address of the response SCTP packet obtained by the router 600 from the backend server 1 410 may be 192.168.20.10, which is the IP address of backend server 1 410. Then, the load balancer 300 may perform SNAT on the address of the obtained response SCTP packet to convert the source IP address to 192.168.30.5, which is the virtual IP address of the load balancer 300, and forward the response SCTP packet to the client 200.

Accordingly, the client 200 may determine to receive the response SCTP packet from the load balancer 300 and not from the backend server 1 410, and thus load distribution of the backend server may be achieved through the load balancer 300.

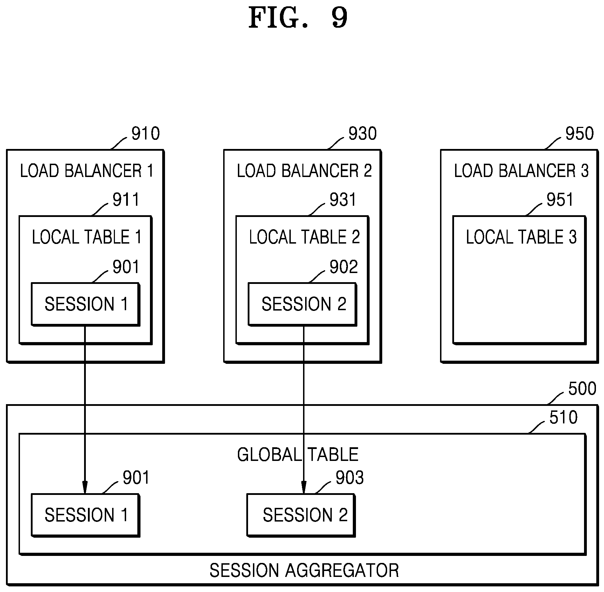

FIGS. 9 to 11 illustrate a method of updating a local table of a load balancer and a global table of a session aggregator, according to an embodiment of the present disclosure.

FIG. 9 illustrates a method of updating a global table in a session aggregator according to an embodiment of the present disclosure.

Referring to FIG. 9, according to an embodiment of the present disclosure, a load balancer 1 910, a load balancer 2 930, and a load balancer 3 950 may include a local table 1 911, a local table 2 931, and a local table 3 951, respectively. The session aggregator 500 may include a global table 510.

According to an embodiment of the present disclosure, the load balancer 1 910, the load balancer 2 930, and the load balancer 3 950 may obtain SCTP packets from an external client, and search for sessions from the obtained SCTP packets in respective local tables, and when no sessions exist, search for the sessions in the global table 510 of the session aggregator 500. The load balancer 1 910, the load balancer 2 930, and the load balancer 3 950 may generate sessions in respective local tables and store the sections in the respective local tables when the session does not exist in the global table 510.

Information of a session according to an embodiment may include at least one of a source IP address (IPv4 or IPv6), a source port, a destination port, a backend server IP address, a protocol type, a packet direction (ingress or egress), SCTP multi-homing, a load balancer address, and a last sync time.

For example, when the load balancer 1 910 obtains a first SCTP packet from a first client, the load balancer 1 910 may search for a session 1 901 in the local table 1 911, and when the session 1 901 does not exist in the local table 1 911, the load balancer 1 910 may search for the session 1 901 in the global table 510. When the session 1 901 does not exist in the global table 510, the load balancer 1 910 may generate the session 1 901 from the first SCTP packet and store the session 1 901 in the local table 1 911. Then, the load balancer 1 910 may generate a new session 1 901 in the global table 510 and store the session 1 901 in the global table 510.

When the load balancer 2 930 obtains a second SCTP packet from a second client, the load balancer 2 930 may search for a session 2 902 in the local table 2 931, and when the session 2 902 does not exist in the local table 2 931, the load balancer 2 930 may search for the session 2 902 in the global table 510. When the session 2 902 does not exist in the global table 510, the load balancer 2 930 may generate the session 2 902 from the second SCTP packet and store the session 2 902 in the local table 2 931. Then, the load balancer 2 930 may generate a new session 2 902 in the global table 510 and store the session 2 902 in the global table 510.

According to an embodiment of the present disclosure, the load balancer 1 910 and the load balancer 2 930 may perform NAT processing on SCTP packets by using information of the corresponding sessions and forward the processed packets to the corresponding backend server.

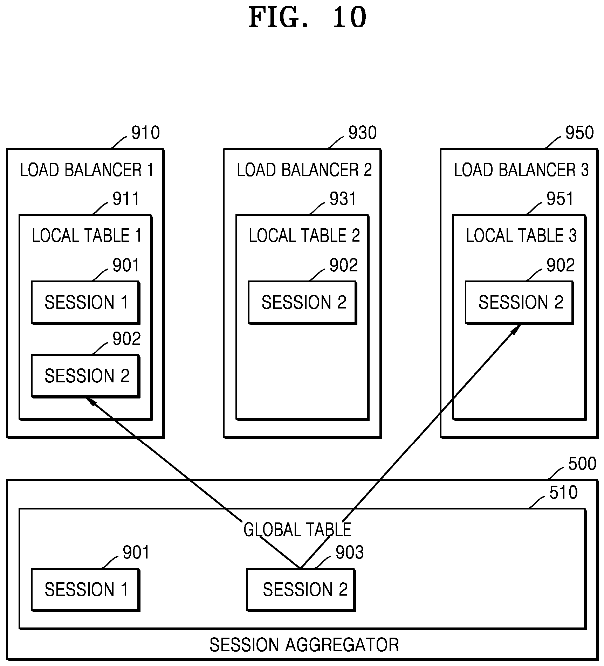

FIG. 10 illustrates a method of updating a global table in a session aggregator and a local table in a load balancer according to an embodiment of the present disclosure.

Referring to FIG. 10, according to an embodiment, when the load balancer 1 910 and the load balancer 3 950 receive a third SCTP packet and a fourth SCTP packet, respectively, from the second client, the load balancer 1 910 and the load balancer 3 950 may search for the session 2 902 in the local table 1 911 and the local table 3 951. When it is identified that the session 2 902 does not exist in the local table 1 911 and the local table 3 951, the load balancer 1 910 and the load balancer 3 950 may search for the session 2 902 in the global table 510 of the session aggregator 500.

When it is identified that the session 2 902 exists in the global table 510, the load balancer 1 910 and the load balancer 3 950 may obtain information about the session 2 902 from the global table 510 and store the information in the local table 1 911 and the local table 3 951, respectively.

According to an embodiment of the present disclosure, the load balancer 1 910 and the load balancer 3 950 may perform NAT processing on SCTP packets by using information of the corresponding sessions and forward the processed packets to the corresponding backend server.

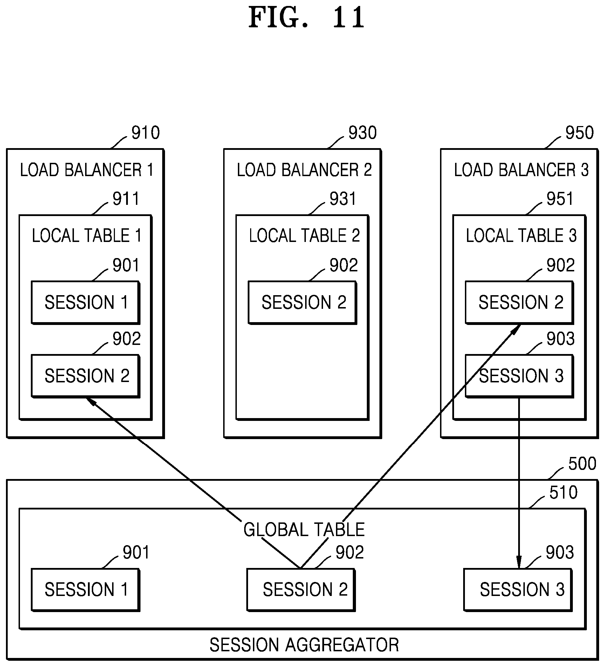

FIG. 11 illustrates a method of updating a global table in a session aggregator according to an embodiment of the present disclosure.

Referring to FIG. 11, when the load balancer 3 950 obtains a fifth SCTP packet from a third client, the load balancer 3 950 may search for a session 3 903 in the local table 3 951, and when the session 3 903 is not in the local table 951, the load balancer 3 950 may search for the session 3 903 from the global table 510. When the session 3 903 does not exist in the global table 510, the load balancer 3 950 may generate the session 3 903 from the fifth SCTP packet and store the session 3 903 in the local table 951. Then, the load balancer 3 950 may generate a new session 3 903 in the global table 510 and store the session 3 903 in the global table 510.

In an embodiment of the present disclosure, the load balancer 3 950 may perform NAT processing on SCTP packets by using information of the corresponding sessions and forward the processed packets to the corresponding backend server.

In an embodiment of the present disclosure, sessions stored in the local table 1 911, the local table 2 931, and the local table 3 951 may be deleted according to a set time of a timer of each load balancer, and when an SCTP packet is received and the processed packet needs to be forwarded to a backend server, each load balancer may search for and obtain the corresponding session from the global table 510.

The global table 510 of the session aggregator 500 may store all sessions obtained by each load balancer, and each load balancer may quickly search for and obtain information about only needed sessions, and thus various effects may be obtained, including an effect of allowing all load balancers to quickly share session information even when a new client is added or a backend server is changed.

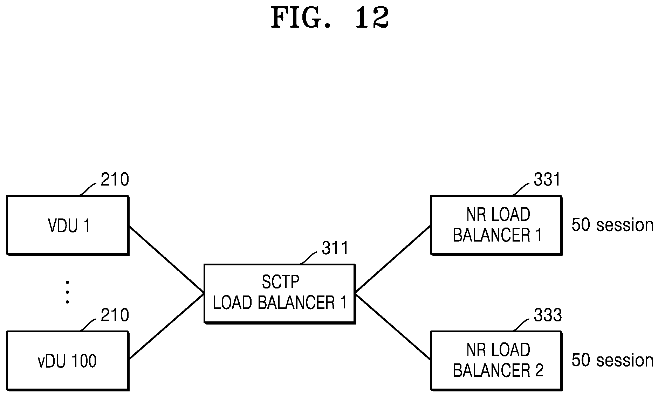

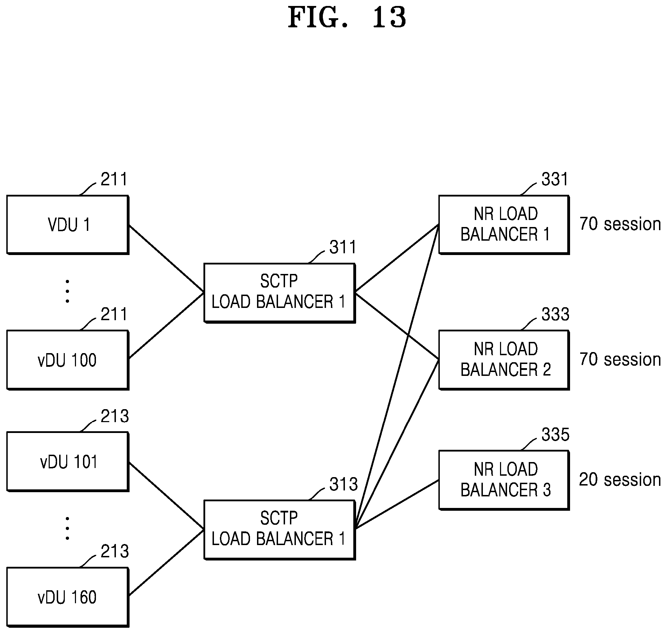

FIGS. 12 and 13 illustrate cases in which session distribution imbalance occurs when session distribution is performed by an SCTP load balancer.

FIG. 12 shows session distribution by an SCTP load balancer.

Referring to FIG. 12, it may be assumed that there are 100 vDUs 210 as clients, and an NR load balancer 1 331 and an NR load balancer 2 333. In this case, when an SCTP packet is received from each vDU 210 to an SCTP load balancer 1 311, 50 sessions may be equally distributed to the NR load balancer 1 331 and the NR load balancer 2 333.

FIG. 13 shows session distribution by an SCTP load balancer when a client is added.

Referring to FIG. 13, it may be assumed that SCTP packets are received from 60 added vDUs 213 to an SCTP load balancer 2 313 and an NR load balancer 3 335 is added. In this case, the SCTP load balancer 2 313 may evenly distribute 20 sessions each from SCTP packets received from the added vDUs 213 to the NR load balancer 1 331, the NR load balancer 2 333, and the NR load balancer 3 335.

In this case, the NR load balancer 1 331 and the NR load balancer 2 333 may each receive a total of 70 sessions obtained by adding 20 sessions distributed from the SCTP load balancer 2 333 to 50 sessions distributed from the SCTP load balancer 1 331. The NR load balancer 3 335 may only receive 20 sessions distributed from the SCTP load balancer 2 333.

Session information may not be shared between SCTP load balancers, and thus an imbalance in the number of sessions distributed to NR load balancers may occur.

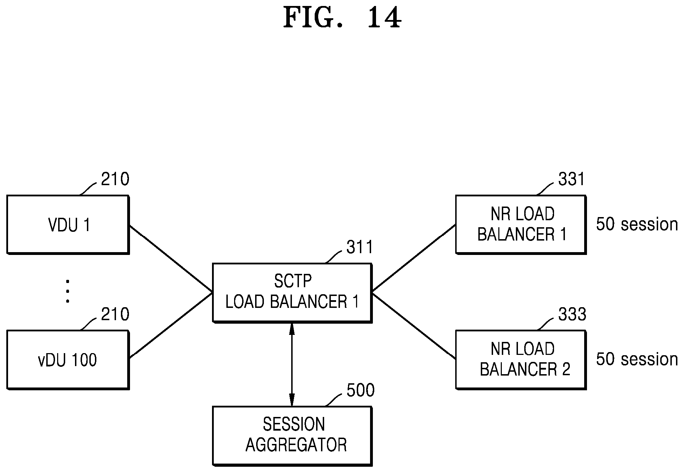

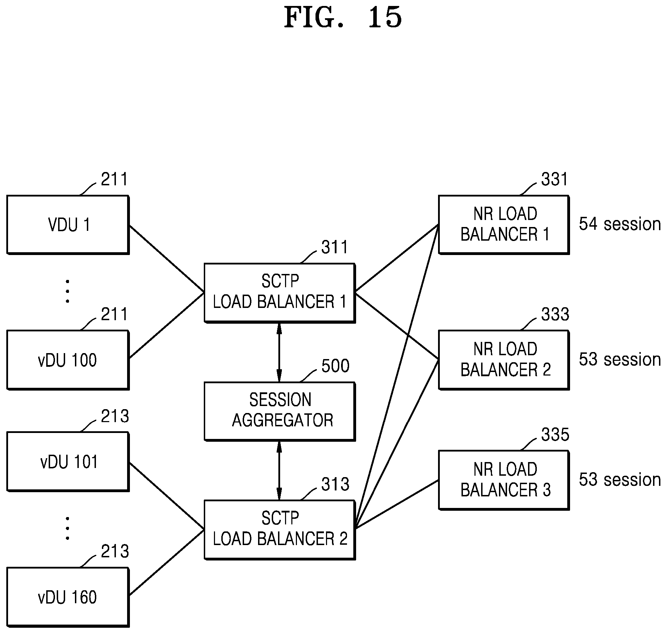

FIGS. 14 and 15 illustrate balanced session distribution when session distribution is performed by a session aggregator.

FIG. 14 illustrates session distribution by an SCTP load balancer using a session aggregator according to the present disclosure.

Referring to FIG. 14, it may be assumed that there are 100 vDUs 210 as clients, and the NR load balancer 1 331 and the NR load balancer 2 333. In this case, when SCTP packets are received from each vDU 210 to the SCTP load balancer 1 311, 50 sessions may be evenly distributed to the NR load balancer 1 331 and the NR load balancer 2 333 by using a global table of the session aggregator 500.

In an embodiment of the present disclosure, the global table of the session aggregator 500 may store all 50 sessions stored in the NR load balancer 1 331 and the NR load balancer 2 333.

FIG. 15 illustrates session distribution by an SCTP load balancer using a session aggregator when a client is added, according to the present disclosure.

Referring to FIG. 15, it may be assumed that SCTP packets are received from 60 added vDUs 213 to the SCTP load balancer 2 313 and the NR load balancer 3 335 is added. In this case, the SCTP load balancer 2 313 may distribute 4 sessions to the NR load balancer 1 331, 3 sessions to the NR load balancer 2 333, and 53 sessions to the NR load balancer 3 335 based on session information stored in the global table of the session aggregator 500.

In this case, the NR load balancer 1 331 may receive a total of 54 sessions obtained by adding 4 sessions distributed from the SCTP load balancer 2 333 to 50 sessions distributed from the SCTP load balancer 1 331. The NR load balancer 1 331 may receive a total of 53 sessions obtained by adding 3 sessions distributed from the SCTP load balancer 2 333 to the 50 sessions distributed from the SCTP load balancer 1 331, and the NR load balancer 3 335 may receive 53 sessions distributed from the SCTP load balancer 2 333.

According to an embodiment, when using the session aggregator 500, even when added clients are generated, sessions may be evenly distributed to NR load balancers based on previously distributed session information, and thus one NR load balancer may not be overloaded.

A case in which the load balancer updates sessions in the local table and the global table by using the global table of the session aggregator 500 may include a case in which a session exists in the local table, a case in which a session does not exist in the local table and the global table, and a case in which a session does not exist in the local table but a session exists in the global table.

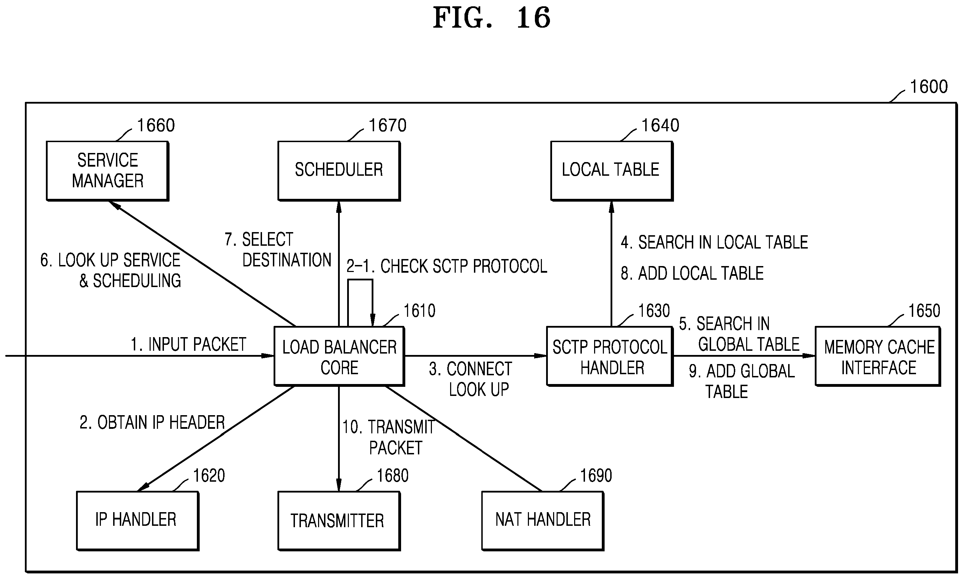

FIGS. 16 to 18 illustrate in detail a case in which a load balancer updates sessions of a local table and a global table by using a global table of the session aggregator 500.

FIG. 16 illustrates an operation of a load balancer when a session corresponding to an obtained SCTP packet does not exist in the global table or the local table, according to an embodiment of the present disclosure.

Referring to FIG. 16, a load balancer 1600 according to an embodiment of the present disclosure may include a load balancer core 1610, an IP handler 1620, an SCTP protocol handler 1630, a local table 1640, a memory cache interface 1650, a service manager 1660, a scheduler 1670, a transmitter 1680, and a NAT handler 1690.

In FIG. 16, only components for explaining the structure of the load balancer 1600 are shown, and the components included in the load balancer 1600 are not limited as shown in FIG. 16. Each component illustrated in FIG. 16 conceptually separates the functions of the load balancer 1600, and the arrangement or functions of the components is not limited to that illustrated in FIG. 16. For example, the service manager 1660 and the scheduler 1670 may perform the lookup service and destination selection functions by one processor.

According to an embodiment of the present disclosure, the load balancer 1600 may obtain an SCTP packet, and the load balancer core 1610 may use the obtained SCTP packet as input.

According to an embodiment of the present disclosure, the load balancer core 1610 may obtain an IP header for the input SCTP packet by using the IP handler 1620. Then, the load balancer core 1610 may check an SCTP protocol and request a lookup connection to the SCTP protocol handler 1630.

According to an embodiment of the present disclosure, the SCTP protocol handler 1630 may search for a session corresponding to the input SCTP packet in the local table 1640, and when the corresponding session is not found in the local table 1640, the SCTP protocol handler 1630 may search for a session corresponding to the input packet in the global table through the memory cache interface 1650.

When the corresponding session does not exist in the global table, according to an embodiment of the present disclosure, the load balancer core 1610 may perform lookup service and scheduling by using the service manager 1660 and select a destination backend server and generate a session by using a Round Robin or least connection algorithm using the scheduler 1670.

According to an embodiment of the present disclosure, the SCTP protocol handler 1630 may add the generated session to the local table 1640 and then add the generated session to the global table by using the memory cache interface 1650.

The load balancer core 1610 may transmit packets processed by the load balancer 1600 to the distributed destination backend server by using the transmitter 1680.

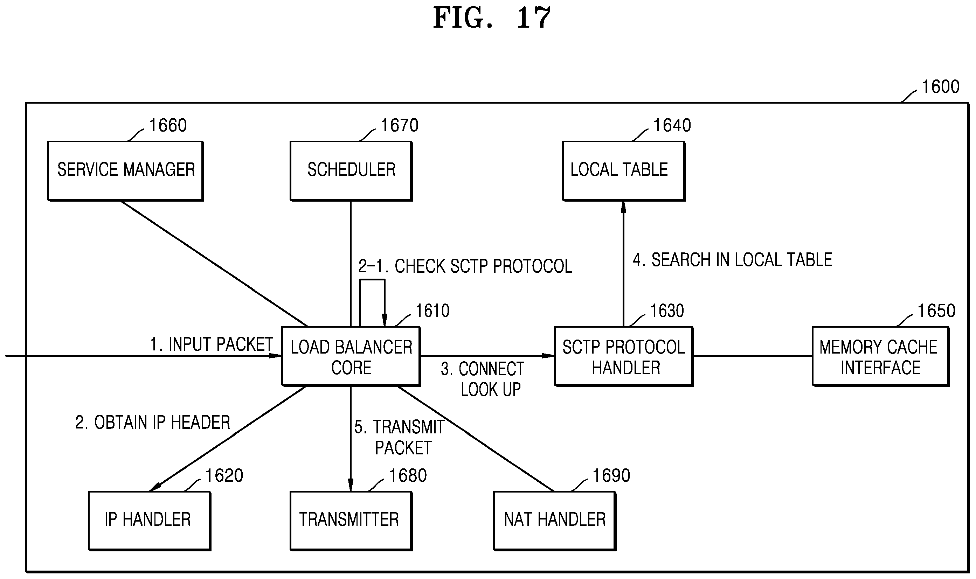

FIG. 17 illustrates an operation of a load balancer when a session corresponding to an SCTP packet exists in a local table, according to an embodiment of the present disclosure.

Referring to FIG. 17, according to an embodiment of the present disclosure, the load balancer 1600 may obtain an SCTP packet, and the load balancer core 1610 may use the obtained SCTP packet as input.

According to an embodiment of the present disclosure, the load balancer core 1610 may obtain an IP header for the input SCTP packet by using the IP handler 1620. Then, the load balancer core 1610 may check an SCTP protocol and request a lookup connection to the SCTP protocol handler 1630.

According to an embodiment of the present disclosure, the SCTP protocol handler 1630 may search for a session corresponding to the input SCTP packet in the local table 1640. When the corresponding session is searched in the local table 1640, the load balancer core 1610 may transmit the packet processed by the load balancer 1600 to a destination backend server corresponding to information of the session by using information of the corresponding session and a transceiver 1680.

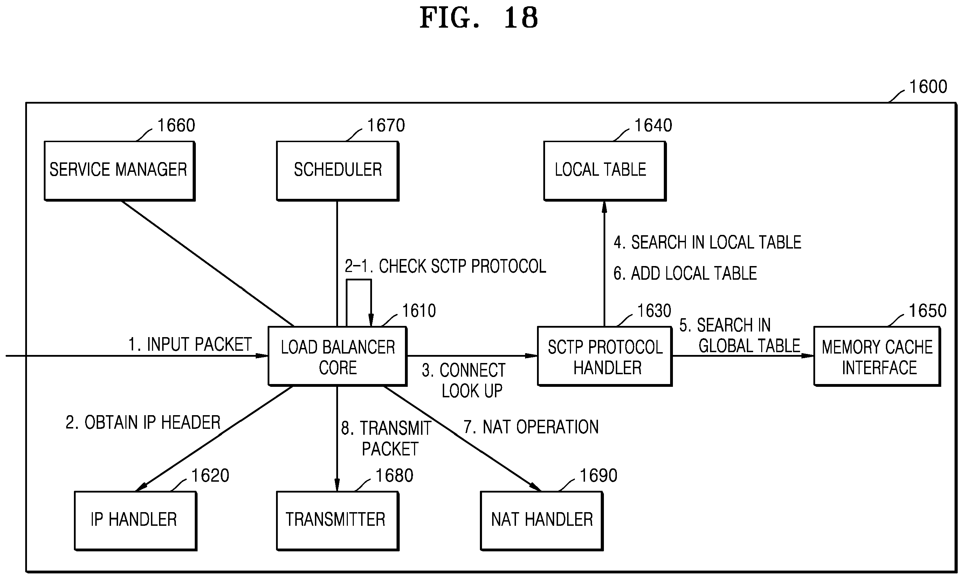

FIG. 18 illustrates an operation of a load balancer when an SCTP packet exists in a global table, according to an embodiment of the present disclosure.

Referring to FIG. 18, according to an embodiment of the present disclosure, the load balancer 1600 may obtain an SCTP packet, and the load balancer core 1610 may use the obtained SCTP packet as input.

According to an embodiment of the present disclosure, the load balancer core 1610 may obtain an IP header for the input SCTP packet by using the IP handler 1620. Then, the load balancer core 1610 may check an SCTP protocol and request a lookup connection to the SCTP protocol handler 1630.

According to an embodiment of the present disclosure, the SCTP protocol handler 1630 may search for a session corresponding to the input SCTP packet in the local table 1640, and when the corresponding session is not found in the local table 1640, the SCTP protocol handler 1630 may search for a session corresponding to the input packet in the global table through the memory cache interface 1650.

When a session corresponding to the packet received from the global table exists, the SCTP protocol handler 1630 may obtain the corresponding session from the global table and additionally store the session in the local table 1640.

Then, the load balancer core 1610 may perform a NAT operation on the packet by using the NAT handler 1690, and the load balancer core 1610 may transmit the packet on which the NAT operation has been performed to the corresponding backend server by using the transmitter 1680.

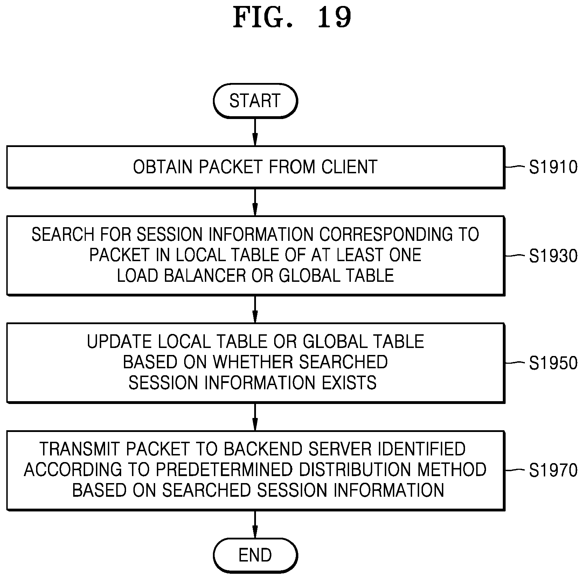

FIG. 19 is a flowchart illustrating a method by which an electronic device performs load balancing in a wireless access network according to an embodiment of the present disclosure.

Referring to FIG. 19, the electronic device may obtain a packet from a client (S1910).

Here, the packet may include an SCTP packet, and the client may include at least one of a vDU, an AMF, an eNB, a gNB, and a vCU-UP.

According to an embodiment, the vDU may distribute functions of a wireless base station and perform data processing, and may communicate with the electronic device based on the F1 interface standard. For example, the vDU may perform functions such as wireless resource management, user authentication, and data transmission.

According to an embodiment, the AMF may be used in a mobile communication network, may manage user movement and service access between base stations, and may communicate with the electronic device based on the E1 interface standard. For example, the AMF may track a user location and control access to services.

According to an embodiment, the eNB may be a base station in a wireless network of 4G long term evolution (4G LTE) or LTE-Advanced, and the gNB may be a base station in a 5G NR network. The eNB and the gNB may transmit wireless signals and communicating with a user device. The eNB and the gNB may communicate with the electronic device based on the X2 and Xn interface standards, respectively.

According to an embodiment, the vCU-UP is a virtualized user plane of a network and may process and transmit user data. Accordingly, the vCU-UP may be virtualized to help increase network efficiency and flexibility. The vCU-UP may communicate with the electronic device based on the E1 interface standard.

The electronic device according to an embodiment of the present disclosure may search for session information corresponding to a packet in a local table of at least one load balancer or a global table (S1930).

The at least one load balancer according to an embodiment of the present disclosure may include an SCTP load balancer and an NR load balancer.

The at least one load balancer may distribute incoming connections among multiple SCTP servers or clients and balance traffic. For example, the load balancer may perform functions of distributing a connection load input to multiple SCTP servers or monitoring the state of each server to switch traffic from a failed server to another server.

The at least one load balancer according to an embodiment of the present disclosure may process SCTP packets from a client and select an appropriate backend server among backend servers for the received SCTP packet. The at least one load balancer may process SCTP packets through network address translation (NAT) and transmit the processed packets to the selected backend server.

The at least one load balancer according to an embodiment of the present disclosure may be used in a 5G wireless network and may adjust and manage data flow in a network. For example, the load balancer may perform functions of evenly distributing data connections coming into multiple NR base stations and managing quality according to a Quality of Service (QoS) policy.

The load balancer may perform functions of decapsulating the received SCTP packets and forwarding the SCTP packets to the backend server based on an identifier (ID) of an NR application protocol (AP) message.

When the at least one load balancer is conceptually separated into an SCTP load balancer and an NR load balancer, the SCTP load balancer may forward the SCTP packets to the NR load balancer by using a least connection or Round Robin distribution algorithm.

According to an embodiment of the present disclosure, the local table may be included in each load balancer to store sessions corresponding to SCTP packets, and the global table may be included in a session aggregator to store sessions corresponding to the SCTP packets.

In the present disclosure, the term "session" refers to a logical group of connections or interactions, and may be used to track and maintain interactions between a client and the backend server.

The electronic device according to an embodiment of the present disclosure may terminate a search without additionally searching a global table when session information corresponding to an SCTP packet exists in the local table, and may process the SCTP packet and transmit the SCTP to a backend server based on the session information existing in the local table.

The electronic device according to an embodiment of the present disclosure may update the local table or the global table based on whether session information exists in the searched local table or the searched global table (S1950).

For example, when the session information does not exist in the local table and the global table, the electronic device may generate session information corresponding to the packet, and store and update the generated session information in the local table and the global table.

For example, when session information does not exist in the local table and session information exists in the global table, the electronic device may obtain session information from the global table and store the obtained session information in the local table to update the session information.

Based on the retrieved session information of the present disclosure, packets may be transmitted to a backend server identified according to a predetermined distribution method (S1970).

Here, the backend server may perform the function of a call processing module, receive packets, and process various services including communication connection management, communication service provision, quality management, and error and abnormal situation management.

Session information according to an embodiment of the present disclosure may include at least one of a source IP address, a source port, a destination IP address, a destination port, a protocol type, a packet direction including either an Ingress or an egress, SCTP multi-homing, an address of a load balancer, and a last sync time.

The distribution method according to an embodiment of the present disclosure may be either a Round Robin algorithm or a least connection algorithm.

The distribution method may be determined based on at least one of whether a corresponding message is a UE message, UE ID information, an NR interface type, a UE handover message, a protocol data unit (PDU) session management message, a UE context management message, a non access stratum (NAS) transport message, a data usage reporting message, a location reporting message, a paging message, a configuration transfer message, a warning message, and a UE radio capability message.

According to an embodiment of the present disclosure, the electronic device may perform network address translation (NAT) processing on a packet based on retrieved session information and transmit the NAT-processed packet to an identified backend server.

When the load balancer is an SCTP endpoint, the load balancer may decapsulate the packet and forward the decapsulated packet to the identified backend server.

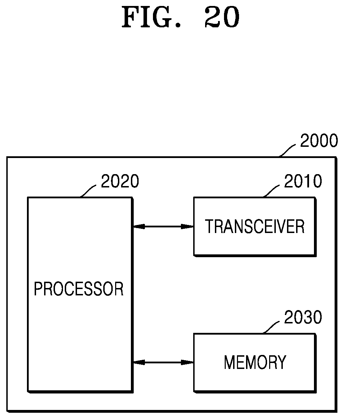

FIG. 20 illustrates an electronic device for performing load balancing in a wireless access network according to an embodiment of the present disclosure.

Referring to FIG. 20, an electronic device 2000 according to an embodiment may include a transceiver 2010, a processor 2020, and memory 2030. According to various embodiments, the configuration of the electronic device 2000 is not limited to that illustrated in FIG. 20, and may further include components not illustrated in FIG. 20 or omit some of the components illustrated in FIG. 20.

The operation of the processor 2020 may be implemented as a software module stored in the memory 2030. For example, a software module may be stored in the memory 2030 and executed by the processor 2020 to operate.

For example, the memory 2030 may include a global table of the session aggregator 500 and a local table of the load balancer 300, and a session corresponding to an SCTP packet in the global table and the local table may be searched for in the memory 2030 by the operation of the processor 2020.

The transceiver 2010 may support establishment of a wired or wireless communication channel between the electronic device 2000 and another external electronic device and communication performance through the established communication channel.

According to an embodiment, the transceiver 2010 may receive a packet or packet processing request from another electronic device or a client, or transmit generated data.

According to various embodiments, the transceiver 2010 may include a wireless communication module (e.g., a cellular communication module, a short-range wireless communication module, or a global navigation satellite system (GNSS) communication module) or a wired communication module (e.g., a local area network (LAN) communication module, or a power line communication module), and using the corresponding communication module among the modules, the transceiver 2010 may communicate with an external electronic device through a short-range communication network (e.g., Bluetooth, WiFi direct, or infrared data association (IrDA)) or a long-range communication network (e.g., a cellular network, the Internet, or a computer network (e.g., a LAN or WAN)).

The processor 2020 may be electrically connected to the components included in a transmitting device and may execute operations or data processing related to control and/or communication of the components included in the transmitting device. According to an embodiment, the processor 2020 may load and process commands or data received from at least one of the other components into the memory 2030, and store the resulting data in the memory 2030.

In FIG. 20, for convenience of explanation, the processor 2020 is expressed as operating as one processor 2020, but the functions of at least some of the modules included in each unit conceptually dividing the functions of the electronic device may be implemented as a plurality of processors. In this case, the processor 2020 may not operate as a single processor 2020, but may be implemented such that a plurality of processors are implemented as separate hardware to perform each operation. The present disclosure is not limited thereto.

The memory 2030 may electrically connected to the processor 2020 and may store commands or data related to the operations of components included in the electronic device.

According to an embodiment, the memory 2030 may also store instructions for executing software modules when the functions of the electronic device 2000 are implemented as software modules that are conceptually separated and executed by the processor 2020.

The computer-readable medium may be provided in the form of a non-transitory storage medium. Here, the 'non-transitory storage medium' is a tangible device and may exclude wired, wireless, optical, or other communication links that transmit temporary electrical or other signals. The ''non-transitory storage medium" does not distinguish between cases in which data is stored semi-permanently or temporarily on a storage medium. For example, the 'non-transitory storage medium' may include a buffer in which data is temporarily stored. The computer-readable medium may be any available media to be accessed by a computer, and may include both volatile and nonvolatile media, removable and non-removable media. The computer-readable medium includes media on which data is to be permanently stored and media on which data is to be stored and later overwritten, such as rewritable optical disks or erasable memory devices.

According to an embodiment, the method according to various embodiments disclosed in the present document may be provided as included in a computer program product. The computer program product may be traded between a seller and a buyer as commodities. The computer program product may be distributed in the form of a machine-readable storage medium (e.g., compact disc read only memory (CD-ROM)), or may be distributed online (e.g., by download or upload) via an application store (e.g., play store TM) or directly between two user devices (e.g., smartphones). In the case of online distribution, at least some of computer program products (e.g., a downloadable application) may be temporarily stored or temporarily generated in a device-readable storage medium, such as memory of a server of a manufacturer, a server of an application store, or an intermediary server.

Definitions for other specific words and phrases may be provided throughout the present disclosure. Those of skill in the art to which the present disclosure belongs will appreciate that, in various instances, the defined words and phrases may also apply to past and future usages.

Each component described later in the specification may additionally perform some or all of the functions performed by other components in addition to its own main function, and some of the main functions of each component may be performed entirely by other components.

The device-readable medium may be provided in the form of a non-transitory storage medium. Here, the 'non-transitory storage medium' means that it is only a tangible device and does not contain signals (e.g. electromagnetic waves), and the term does not distinguish between cases in which data is stored semi-permanently or temporarily on a storage medium. For example, the 'non-transitory storage medium' may include a buffer in which data is temporarily stored.

According to an embodiment, the method according to various embodiments disclosed in the present document may be provided as included in a computer program product. The computer program product may be traded between a seller and a buyer as commodities. The computer program product may be distributed in the form of a machine-readable storage medium (e.g., compact disc read only memory (CD-ROM)), or may be distributed online (e.g., by download or upload) via an application store or directly between two user devices (e.g., smartphones). In the case of online distribution, at least some of computer program products (e.g., a downloadable application) may be temporarily stored or temporarily generated in a device-readable storage medium, such as memory of a server of a manufacturer, a server of an application store, or an intermediary server.

## Claims

1. A method of performing load balancing in a control plane of a virtual wireless access network, the method comprising:
obtaining a packet from a client (S1910);
searching for session information corresponding to the packet in a local table of at least one load balancer or a global table (S1930);
updating the local table or the global table based on whether the searched session information exists (S1950); and
transmitting the packet to a backend server identified according to a predetermined distribution method based on the searched session information (S1970).

2. The method of claim 1, wherein the session information comprises at least one of a source Internet Protocol (IP) address, a source port, a destination IP address, a destination port, a protocol type, a packet direction comprising either ingress or egress, stream control transmission protocol (SCTP) multi-homing, an address of a load balancer, and a last sync time.

3. The method of any one of claim 1 or 2, wherein the distribution method
is any one of a Round Robin algorithm, a hashing algorithm, and a least connection algorithm.

4. The method of any one of claims 1 to 3, wherein the distribution method
is determined based on at least one of whether a corresponding message is a user equipment (UE) message, UE ID information, a new radio (NR) interface type, a UE handover message, a protocol data unit (PDU) session management message, a UE context management message, a non access stratum (NAS) transport message, a data usage reporting message, a location reporting message, a paging message, a configuration transfer message, a warning message, and a UE radio capability message.

5. The method of any one of claims 1 to 4, wherein the searching for the session information corresponding to the packet (S1930) comprises, when the session information exists in the local table, terminating the searching, and
wherein the updating of the local table or the global table comprises, when the session information exists in the local table, maintaining the local table or the global table.

6. The method of any one of claims 1 to 5, wherein the updating of the local table or the global table (S1950) comprises:
when the session information does not exist in the local table and the global table, generating session information corresponding to the packet; and
storing and updating the generated session information in the local table and the global table.

7. The method of any one of claims 1 to 6, wherein the updating of the local table or the global table (S1950) comprises:
when the session information does not exist in the local table and the session information exists in the global table, obtaining the session information from the global table; and
storing and updating the obtained session information in the local table.

8. The method of claim 7, wherein the transmitting of the packet to the identified backend server (S1970) comprises:
performing network address translation (NAT) processing on the packet based on the searched session information; and
transmitting the NAT-processed packet to the identified backend server.

9. The method of any one of claims 1 to 8, wherein the transmitting of the packet to the backend server identified according to the predetermined distribution method (S1970) comprises:
when the load balancer is an SCTP endpoint, decapsulating the packet; and
transmitting the decapsulated packet to the identified backend server.

10. The method of any one of claims 1 to 9, wherein the at least one load balancer comprises at least one stream control transmission protocol (SCTP) load balancer and at least one new radio (NR) load balancer, and
wherein the transmitting of the packet to the backend server identified according to the predetermined distribution method comprises:
identifying the backend server by the at least one SCTP load balancer;
forwarding the NAT-processed packet to the at least one NR load balancer;
decapsulating the processed packet by the at least one NR load balancer; and
transmitting the decapsulated packet to the backend server.

11. A computer-readable recording medium having recorded thereon a program for performing the method of any one of claims 1 to 10 on a computer.

12. An electronic device for performing load balancing in a control plane of a virtual wireless access network, the electronic device comprising:
a transceiver (2010); and
at least one processor (2020) configured to execute one or more instructions stored in the electronic device,
wherein the at least one processor (2020) is configured to
obtain a packet from a client through the transceiver (2010),
search for session information corresponding to the packet in a local table of at least one load balancer or a global table,
update the local table or the global table based on whether the searched session information exists, and
transmit the packet to a backend server identified according to a predetermined distribution method based on the searched session information.

13. The electronic device of claim 12, wherein the at least one processor (2020) is configured to, when the session information exists in the local table, terminate the searching, and
when the session information exists in the local table, maintain the local table or the global table.

14. The electronic device of any one of claim 12 or 13, wherein the at least one processor (2020) is configured to, when the session information does not exist in the local table and the global table, generate session information corresponding to the packet, and
store and update the generated session information in the local table and the global table.

15. The electronic device of any one of claims 12 to 14, wherein the at least one processor (2020) is configured to, when the session information does not exist in the local table and the session information exists in the global table, obtain the session information from the global table, and
store and update the obtained session information in the local table.
